Europäisches Patentamt

European Patent Office

Office européen des brevets

(19)

(11) **EP 1 571 184 A1**

(12) **EUROPEAN PATENT APPLICATION**

(43) Date of publication:
**07.09.2005 Bulletin 2005/36**

(51) Int Cl.⁷: **C09D 11/00**

(21) Application number: **05250952.8**

(22) Date of filing: **19.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **03.03.2004  US 549890 P**

(71) Applicant: **ROHM AND HAAS COMPANY**
**Pennsylvania 19106-2399 (US)**

(72) Inventors:
• **Graziano, Louis Christopher**
**Doylestown, Pennsylvania 18901 (US)**

• **Wu, Richard Shu-hua**
**Fort Washington, Pennsylvania 19034 (US)**
• **Lein, George Max**
**Chalfont, Pennsylvania 18914 (US)**

(74) Representative: **Buckley, Guy Julian et al**
**ROHM AND HAAS (UK) LTD.**
**European Patent Department**
**28th Floor, City Point**
**One Ropemaker Street**
**London EC2Y 9HS (GB)**

(54) **Radiation curable aqueous binders for ink jet inks**

(57)     A polymer composition which is crosslinked and insoluble in radiation curable monomers, prepolymers, oligomers, and mixtures thereof, is suitable for formulation into radiation curable compositions, for example, as binders for formulation in radiation curable ink jet ink compositions. Such crosslinked, insoluble polymer compositions impart improved application and curing characteristics to ink jet ink compositions without loss of acceptable jettability characteristics. The polymer composition may be blended with radiation curable monomers, prepolymers, oligomers, or mixtures thereof, to form a radiation curable binder blend for formulation into a radiation curable ink jet ink composition. A radiation curable ink jet ink composition including at least one crosslinked, insoluble polymer binder composition, a liquid medium and a colorant is also provided.

**EP 1 571 184 A1**

**Description**

Field of the Invention

The present invention relates to radiation curable, dispersible polymer binder compositions for use as components of radiation curable ink jet ink compositions. The present invention also relates to the radiation curable ink jet ink compositions which comprise a liquid medium, a colorant and one or more of the radiation curable, dispersible polymer binder composition.

Background of the Invention

Ink jet printing is a well established technique for applying an ink jet ink composition to a substrate, such as paper, fabric, vinyl, leather, ceramics, polyester, or plastic, to form an image on the substrate. Ink jet printing involves no physical contact between the functional part of the ink jet printer from which the ink jet ink composition is projected, or "jetted", and the substrate onto which the ink jet ink composition is deposited.

Generally, ink jet ink compositions are mixtures, dispersions, solutions or suspensions, that include at least one liquid component and at least one colorant which may be soluble (dyes) or insoluble (pigments or dyes) in the liquid component or components. In practice, micro-droplets of the ink jet ink composition are projected, by well known means, through small nozzles in the print head of the ink jet printer and onto the substrate. After such application, the ink jet ink composition is dried or cured, depending on the type of liquid component or components used, to solid form on the substrate such that the colorant, or colorants, become fixed on the substrate to form the desired image. As discussed in further detail below, in order to maintain the required degree of projectability, or "jettability" as it is referred to in the art, of the ink jet ink composition, they have heretofore been formulated to have relatively low viscosities and include substances having relatively small particle sizes.

Ink jet ink compositions may be water-based (i.e., aqueous), solvent-based, oil-based, or 100% solids. This nomenclature differentiates the ink jet ink compositions in terms of how much of the ink jet ink composition is left behind on the substrate after drying or curing. Water-based, solvent-based, and oil-based ink jet ink compositions will lose at least a portion of the liquid component to evaporation during the post-application drying or curing step, such that only a portion of the mass of the ink jet ink composition remains on the substrate to form the desired image. On the other hand, the drying or curing step will convert substantially all of the liquid component or components of 100% solids ink jet ink compositions to solid form such that substantially all of the mass of a 100% solids ink jet ink composition remains on the substrate to form the desired image.

Any of the foregoing four types of ink jet ink compositions (i.e., aqueous, solvent-based, oil-based and 100% solids) may be radiation curable, which means that they can be cured by exposure to actinic radiation. Typically, radiation curable ink jet ink compositions require the inclusion of mixtures of radiation curable monomers, or such monomers mixed with low molecular weight radiation curable oligomers. Such monomers and oligomers are typically in liquid form and are unreactive at ambient conditions, but are capable of being initiated to react and crosslink with themselves and/or each other by exposure to actinic radiation, such as ultraviolet (UV) radiation or electronic beam (E-beam) radiation. It is known that where UV radiation is to be used to initiate such monomers and/or oligomers, it is often necessary to also include photoinitiators in the mixture of radiation curable monomers and/or oligomers. The reacting and crosslinking of the radiation curable monomers and/or oligomers converts them to solid form and binds the colorant or colorants of the ink jet ink composition onto the substrate.

Radiation curable monomers and/or oligomers, as well as certain polymer compositions, may act as "binders" when included in ink jet ink compositions. The use of such polymer binders is known to improve various properties of the ink compositions, as well as the images created therefrom. Such improved properties include, but are not limited to, abrasion resistance, wash resistance, smear resistance, permanence, gloss, adhesion and optical properties. It is also known that as the molecular weight of the polymer binder constituents increases, the aforesaid properties of the ink compositions and images formed therefrom can be further improved.

Thus, on the one hand, it would be advantageous to use polymer binders having relatively high molecular weights in ink jet ink compositions. However, it is also known that, as mentioned in U.S. Patent No. 6,294,592, it is important to control the viscosity of ink jet ink compositions, in part, to maintain the desired jettability of the ink compositions (i.e., to ensure that the ink jet ink compositions can be effectively projected from the small nozzles of the ink jet printer). In practice this means that it is often important to keep the viscosities of ink jet ink compositions relatively low.

Unfortunately, as the molecular weight of the polymer binder compositions used in radiation curable ink jet ink compositions increases, the viscosity of the ink jet ink compositions also typically increases, sometimes to the point of interfering with jettability of the ink composition. In addition, high molecular weight binders may dry or coagulate at the nozzle surface resulting in poor jettability of the ink. Thus, to ensure jettability of radiation curable ink jet ink compositions, the molecular weight of the polymer binders must also be low enough to form an ink composition having sufficiently low viscosity and demonstrating the ability to be ejected from the printhead for extended periods of time without clogging or misdirecting. As a result, the use of polymer binders for radiation curable ink jet ink compositions is often limited to the inclusion of monomeric, macromonomeric and oligomeric binder constituents having a number average molecular weight, $M_n$, of not more than about 15,000 in order to effectively jet the ink from the nozzles of the printhead.

For example, U.S. Patent No. 6,294,592 discloses the use of radiation curable binder compositions, including acrylate, polyurethane, vinyl and/or epoxy monomers, prepolymers and polymers, and mixtures thereof, in aqueous emulsion form, as binders for curable aqueous ink jet ink compositions. However, the constituents of the binder compositions of U.S. 6,294,592 are limited to having number average molecular weight ($M_n$) of about 15,000 or less. In addition, the use of isocyanate functionality is required, which can give rise to toxicity concerns as well as stability issues with regard to high reactivity of isocyanate and water.

WO 02/064689 discloses aqueous ink jet ink compositions that include UV curable binder compositions comprising oligomers or prepolymers, which are dilutable in the aqueous medium of the ink composition. The oligomers and prepolymers have a molecular weight of from about 2,000 to about 10,000 and may include unsaturated urethane, acrylic, polyester and epoxy resins, and mixtures thereof. Furthermore, the oligomers and prepolymers have a mean particle size of about 30 nanometers to about 80 nanometers.

Ink jet ink compositions containing soluble, low molecular weight ($M_n$) radiation curable polymers, such as those described in the above references, are typically limited in the amount of the polymer binder that can be included in ink jet ink compositions due to the viscosity contributions of the polymer.

There is a need for polymer binder compositions having a high molecular weight which can be used in radiation curable ink jet ink compositions and which would achieve further improvements to the properties of the ink jet ink compositions and the images formed therefrom. Such ink jet ink compositions can exhibit improved durability, such as wash-fastness or smear resistance, due, it is believed, to increased adhesion and flexibility that can be imparted to the ink jet ink composition by the high molecular weight polymer binder, when the ink composition is applied to a substrate and cured to form an image thereon.

In addition, there is a need to minimize the increase in viscosity of a curable ink composition that includes such higher molecular weight polymer binders when reactive monomers, prepolymers, and/or oligomers are added, so that the ink jet ink compositions can be formulated with a higher resin content. The ability to formulate ink jet ink compositions with high resin content can result in improved application properties of the ink compositions, such as improved early set resulting in better image quality, as compared to traditional radiation cured inks, and improved holdout on porous media such as paper and textiles. Benefits in flexibility of such ink compositions can also be realized due to the ability to design resin softness into such ink compositions.

The problem addressed by the present invention is to provide radiation curable, dispersible polymer binder compositions for use in ink jet ink compositions and which are capable of imparting improvements to the aforementioned characteristics of the ink composition into which they are formulated, while avoiding unacceptable increases in viscosity of the ink composition which otherwise can result in poor jettability, or even total failure to jet, of the ink composition.

Summary of the Invention

A radiation curable polymer binder composition is provided for formulation into a radiation curable ink jet ink composition. The radiation curable polymer binder composition is dispersible in an aqueous medium, is unreactive at ambient conditions and capable of being initiated upon exposure to actinic radiation and has a number average molecular weight greater than 15,000 daltons. The polymer composition may have a number average molecular weight of up to 3,000,000.

A radiation curable binder blend is also provided which comprises the aforesaid radiation curable polymer binder composition and a liquid medium, and when the radiation curable binder blend is formulated into an ink jet ink composition, the ink jet ink composition is jettable.

The present invention further provides a radiation curable ink jet ink composition which comprises: a colorant; a liquid medium; and an aqueous dispersion comprised of the aforesaid radiation curable polymer binder composition. In the radiation curable ink jet ink composition, the said radiation curable polymer binder composition comprises 1% to 30%, by weight based on the total weight of the dry polymer composition, of units derived from mono-ethylenically unsaturated (meth)acrylates, multi-ethylenically unsaturated (meth)acrylates, and mixtures thereof. The liquid medium of the radiation curable ink jet ink composition comprises at least one component selected from the group consisting of radiation curable monomers, radiation curable prepolymers, radiation curable oligomers, and mixtures thereof, and is present in an amount of from 20 wt% to 85 wt%, based on the total weight of said ink jet ink composition.

The present invention also provides a method for improving the characteristics of a radiation curable ink jet ink composition applied to a substrate comprising the steps of: (a) providing a radiation curable ink jet ink composition comprising a liquid medium, a colorant and an aqueous dispersion of at least one radiation curable polymer binder composition which has a number average molecular weight greater than 15,000 daltons and is dispersible in aqueous media and capable of being initiated upon exposure to actinic radiation; (b) applying said ink jet ink composition to a substrate; and (c) curing said ink jet ink composition by applying actinic radiation thereby forming an image on the substrate. The image thus formed is also within the scope of the present invention.

Detailed Description of the Invention

The present invention relates to polymer compositions which are radiation curable and dispersible in aqueous media and suitable for use in radiation curable compositions. Such radiation curable compositions find application in various fields, including, but not limited to, coatings such as paints and inks, especially aqueous ink jet ink compositions, and adhesives. For example, radiation curable ink jet ink compositions that are formulated with the radiation curable, dispersible polymer binder compositions of the present invention typically comprise a liquid medium, a colorant and at least one radiation curable, dispersible polymer binder composition.

Definitions and conventions relating to certain terminology and measurements that are used throughout the following discussion are as follows.

The term "aqueous" medium, as used herein, means a medium that is from 40% to 100% water, by weight, based on the total weight of the aqueous medium, with the remainder of the aqueous medium being, optionally, comprised of suitable solvents, dispersants, emulsifiers, etc.

As used herein, the term "dispersion" refers to a physical state of matter that includes at least two distinct phases wherein a first phase is distributed in a second phase, the second phase being a continuous medium.

As used herein, the term "molecular weight" refers to the number average molecular weight of polymer molecules as determined by gel permeation chromatography using polystyrene as a standard and tetrahydrofuran as the mobile phase.

The term "units derived from" used herein refers to polymer molecules that are synthesized according to known polymerization techniques wherein a polymer contains "units derived from" its constituent monomers, prepolymers and/or oligomers.

The term "dispersible" is used herein to describe polymer materials which, when mixed, blended, or otherwise combined, with a liquid medium, the polymer material maintains its identity as particles. Moreover, when "dispersible" polymer materials are formulated into an ink jet ink composition, the viscosity of the ink jet ink composition does not appreciably increase, but rather the viscosity remains no greater than about 0.15 Pa-s, as measured using a Brookfield Viscometer Model DV-II with a Brookfield UL Adapter and recorded at a spindle speed of 20 rpm.

As is well known in the art, the glass transition temperature, Tg, of a polymer can be estimated using the Fox equation (Bulletin of the American Physical Society 1, 3, page 123 (1956)), which is as follows:

$$\frac{1}{T_g} = \frac{W_1}{T_{g(1)}} + \frac{W_2}{T_{g(2)}}$$

For a copolymer including monomers $M_1$ and $M_2$, $w_1$ and $w_2$ refer to the weight fraction of the two monomers, respectively, and $T_{g(1)}$ and $T_{g(2)}$ refer to the glass transition temperatures, in degrees Kelvin, of the two corresponding homopolymers derived from monomers $M_1$ and $M_2$. The glass transition temperatures of various homopolymers can be found, for example, in "Polymer Handbook", edited by J. Brandrup and E.H. Immergut, Interscience Publishers. For polymers containing three or more monomers, additional terms are added (i.e., $1/T_g = \Sigma(W_n/T_{g(n)})$. Although the $T_g$ of a polymer can also be measured by various other techniques, the particular values of $T_g$ reported hereinafter are calculated based on the Fox equation provided above.

As used herein, the term "(meth)acrylates" is intended to include both acrylate and methacrylate types of monomers.

As used herein, the term "radiation curable" means that the particular compositions being discussed are unreactive at ambient conditions, but capable of being initiated to react and crosslink with themselves and/or other radiation curable compounds (i.e., "cured"), by exposure to actinic radiation, such as ultraviolet (UV) radiation or electronic beam (E-beam) radiation.

The term "ambient conditions" as used herein in connection with radiation curable compounds refers to ambient temperatures of from about 15 °C to 40 °C and ambient pressure of about 1 atmosphere.

All percentages used herein to describe the compositional constituents of the various embodiments of the present invention, unless otherwise specified, are weight percents based upon the total weight of the particular composition, latex, mixture, etc. being discussed.

All ranges defined herein are inclusive and combinable.

Although the radiation curable, dispersible polymer binder composition of the present invention may be useful in other types of radiation curable compositions, including various types of coatings or adhesives, as would be understood by persons of ordinary skill in the relevant art, the discussion and description which follow focus on application of the polymer compositions of the present invention as binders for formulation into radiation curable ink jet ink compositions. Furthermore, while the radiation curable, dispersible polymer binder compositions of the present invention will be described hereinafter in particular in connection with aqueous (also known as latex) radiation curable ink jet ink compositions, it is understood that they may also be useful for other types of ink jet ink compositions.

A first embodiment of the present invention comprises polymer binder compositions which are radiation curable, dispersible in aqueous media, and suitable for formulating into radiation curable aqueous ink jet ink compositions. Without intending to be limited by theory, it is believed that the dispersibility of the polymer composition reduces viscosity increases such that, when the polymer binder compositions are formulated into a radiation curable ink jet ink composition, the ink jet ink composition remains jettable through conventional ink jet ink printing apparatus. The radiation curable, dispersible polymer binder compositions comprise, as polymerized units, at least one unreacted radiation curable functionality which is unreactive at ambient conditions and capable of reacting upon exposure to actinic radiation.

In addition, the radiation curable, dispersible polymer binder compositions have a number average molecular weight ($M_n$) of from greater than about 15,000 to about 3,000,000.

The inclusion of such radiation curable, dispersible polymer binder compositions in radiation curable aqueous ink jet ink compositions may result in improvements to one or more of the following characteristics of the ink compositions: jettability, substrate holdout, adhesion, abrasion resistance, wash resistance, smear resistance, flexibility or optical properties.

More particularly, the radiation curable, dispersible polymer binder compositions of the present invention comprise, as polymerized units, from 1 wt% to 30 wt%, based on the total weight of the dry radiation curable, dispersible polymer binder composition, of one or more curable compositions which are unreactive at ambient conditions and are capable of being initiated via actinic radiation. The aforesaid one or more curable compositions comprise, without limitation, for example, multi-ethylenically-unsaturated monomers as described in EP1245644A2 and include, but are not limited to di-, tri-, tetra-, or higher multi-functional ethylenically unsaturated monomers. Such multi-functional ethylenically unsaturated monomers include, for exmaple, without limitation, one or more types of (meth)acrylates.

The remainder of the radiation curable, dispersible polymer binder compositions may comprise, as polymerized units, from 99 wt% to 70 wt%, based on the total weight of the dry radiation curable, dispersible polymer binder composition, one or more monomers including, but not limited to, those described in EP1245644A2, such as, (meth) acrylate monomers, (meth)acrylic acid, $C_1$-$C_{12}$ (meth)acrylates, (meth)acrylamides, methylolacrylamides, $C_8$-$C_{22}$ alkenyl (meth)acrylates, aromatic (meth)acrylates, phosphorus-containing compounds such as phosphoethyl (meth)acrylate, amine functional (meth)acrylates, and hydroxy alkyl (meth)acrylates.

The radiation curable, dispersible polymer binder compositions of the present invention typically have number average molecular weight ($M_n$) in the range of from greater than about 15,000 to about 3,000,000, including from 15,000 to 2,000,000 and even from 25,000 to 1,500,000.

The glass transition temperature ("Tg") of the radiation curable, dispersible polymer binder compositions is typically from -50°C to 150°C, for example from -25°C to 120°C, and even from -10°C to 100°C, the exact preferred Tg depending on the application for which the ink is being used. The monomers and amounts of the monomers used to prepare the radiation curable, dispersible polymer binder compositions are selected, as is well-known to persons of ordinary skill in the art, to achieve the desired polymer Tg range.

In addition, the radiation curable, dispersible polymer binder compositions have an average particle diameter of from about 1 to 1000 nanometers ("nm"), such as from about 20 to 500 nm, or from about 50-300 nm, as determined using a Brookhaven Model BI-90 particle sizer manufactured by Brookhaven Instruments Corporation, Holtsville NY, reported as "effective diameter". It is also contemplated that the radiation curable, dispersible polymer binder compositions of the present invention may include multimodal particle size emulsion polymers, wherein two or more distinct particle sizes, or very broad distributions, are provided, as is taught in US Patent Nos. 5,340,858; 5,350,787; 5,352,720; 4,539,361; and 4,456,726, each of which are hereby incorporated herein in their entireties.

The radiation curable, dispersible polymer binder compositions of the present invention are typically prepared using emulsion addition polymerization, but can also be prepared using other polymerization methods such as dispersion, solution, suspension or condensation polymerization. For example, a radiation curable, dispersible polymer binder composition prepared using a condensation polymerization method may, for example, be comprised of from 1 to 30 wt% hydroxy functional (meth)acrylate monomer, such as hydroxy ethyl (meth)acrylate, and multi-functional hydroxy functional compounds, and mono- and multi-functional isocyanate compounds. Examples of such multi-functional hydroxy compounds include but are not limited to trimethylolpropane, hexanediol, and polymers or oligomers derived from hydroxy functional monomers such as for example phenoxy ethyl (meth)acrylate, cyclictrimethylolpropane formal mono(meth)acrylate, 1,6-hexanediol diacrylate, alkoxylated pentaerythritol tetraacrylate, polycaprolactone polyol, and polypropylene glycol. Examples of such multifunctional isocyanate compounds include but are not limited to toluene diisocyanate, methylenediisocyanate, isophorone diisocyanate, trimethylhexamethylene diisocyanate, and xylylene diisocyanate.

Furthermore, the radiation curable, dispersible polymer binder compositions of the present invention can be combined with other reactive or non-reactive binders which have a $M_n < 25,000$ and which may be soluble or dispersible in a liquid medium containing the radiation curable binder composition.

Furthermore, where it is desirable to provide additional radiation curable functionalities to the radiation curable, dispersible polymer binder compositions, one or more of them may also contain the following compounds, either alternatively or in combination, as polymerized units:

a. at least one multiethylenically unsaturated monomer, and

b. at least one monoethylenically unsaturated monomer which has a reactable functionality that can be reacted with a modifying compound which, in turn, contains a complementary reactable group, reactable by either ionic or covalent bonding, as well as a radiation curable functional group that can be reacted through exposure to actinic radiation. Whether the reaction between the reactable functionality and the complemetary functional group (the complementary bonding pair) is ionic or covalent, the first or second member of each complementary bonding pair may be present either in the polymer binder composition or, alternatively, in the modifying compound.

Inclusion of multiethylenically unsaturated monomers, as polymerized units, in the radiation curable, dispersible polymer binder compositions provides radiation curable functionality to the polymer binder compositions. More particularly, suitable multiethylenically unsaturated monomers useful in the present invention include di-, tri-, tetra-, or higher multifunctional ethylenically unsaturated monomers, such as, for example, trivinylbenzene, divinyltoluene, divinylpyridine, divinylnaphthalene and divinylxylene; and such as ethyleneglycol diacrylate, trimethylolpropane triacrylate, diethyleneglycol divinyl ether, trivinylcyclohexane, allyl methacrylate ("ALMA"), ethyleneglycol dimethacrylate ("EGDMA"), diethyleneglycol dimethacrylate ("DEGDMA"), propyleneglycol dimethacrylate, propyleneglycol diacrylate, trimethylolpropane trimethacrylate ("TMPTMA"), divinyl benzene ("DVB"), 2,2-dimethylpropane-1,3-diacrylate, 1,3-butylene glycol diacrylate, 1,3-butylene glycol dimethacrylate, 1,4-butanediol diacrylate, diethylene glycol diacrylate, diethylene glycol dimethacrylate, 1,6-hexanediol diacrylate, 1,6-hexanediol dimethacrylate, tripropylene glycol diacrylate, triethylene glycol dimethacrylate, tetraethylene glycol diacrylate, polyethylene glycol 200 diacrylate, tetraethylene glycol dimethacrylate, polyethylene glycol dimethacrylate, ethoxylated bisphenol A diacrylate, ethoxylated bisphenol A dimethacrylate, polyethylene glycol 600 dimethacrylate, poly(butanediol) diacrylate, pentaerythritol triacrylate, trimethylolpropane triethoxy triacrylate, glyceryl propoxy triacrylate, pentaerythritol tetraacrylate, pentaerythritol tetramethacrylate, dipentaerythritol monohydroxypentaacrylate, divinyl silane, trivinyl silane, dimethyl divinyl silane, divinyl methyl silane, methyl trivinyl silane, diphenyl divinyl silane, divinyl phenyl silane, trivinyl phenyl silane, divinyl methyl phenyl silane, tetravinyl silane, dimethyl vinyl disiloxane, poly(methyl vinyl siloxane), poly(vinyl hydro siloxane), poly (phenyl vinyl siloxane), and mixtures thereof.

With reference to the above-described monoethylenically unsaturated monomers, it is noted that their inclusion, as polymerized units, in one or more of the radiation curable, dispersible polymer binder compositions, would not itself provide the polymer binder compositions with radiation curable functionalities. However, when the monoethylenically unsaturated monomers contain secondary reactable functionality, the resultant polymer composition can be reacted with the complementary reactable group of a suitable modifying compound which also contains a radiation curable functional group. This results in the incorporation of a radiation curable functionality in the radiation curable, dispersible polymer binder composition.

In practice, after initial formation of the dispersible polymer binder compositions by any of the conventional known polymerization techniques mentioned above, but prior to formulation of the polymer binder composition into a radiation curable ink composition, suitable modifying compounds are blended and reacted with the dispersible polymer binder compositions such that the modifying compounds would be chemically combined with the dispersible polymer binder compositions and their radiation curable functionalities would still be available for reaction by exposure to actinic radiation. In the foregoing manner, radiation curable functional groups are incorporated into the radiation curable, dispersible polymer binder compositions.

Where the reactable functionality of the radiation curable, dispersible polymer binder compositions and the complementary reactable group of the modifying compound are ionic complementary bonding pairs, their bonding may involve acid-base interaction and/or ion pair bonding of negatively and positively charged atoms. Where ionic complementary bonding pairs are to be used, suitable modifying compounds include, but are not limited to, (meth)acrylic acid, crotonic acid, dicarboxylic acid monomers such as itaconic acid, maleic acid, and fumaric acid, 2-acrylamido-2-methyl propane sulfonic acid, styrene sulfonic acid, vinyl sulfonic acid; and phosphorous acid monomers such as 2-phosphoethyle (meth)acrylate, vinyl phosphoric acid, vinyl phosphinic acid, N,N-dimethyl aminoethyl(meth)acrylate, and N-ethyldimethylallyl amine.

Covalent bonding, may be achieved with complementary reaction groups such as, for example: (a) acetoacetate-aldehyde; (b) acetoacetate-amine; c) amine-aldehyde; (d) hydroxyl-anhydride; (e) amine-isocyanate; (f) amine-epoxy; (g) aldehyde-hydrazide; (i) acid-epoxy; (j) acid-carbodiimide; (k) acid-chloro methyl ester; (j) acid-chloro methyl amine; (m) acid-anhydride; (n) acid-aziridine; (o) epoxy-mercaptan; (p) alcohol-epoxy; and (q) isocyanate-alcohol. Where complementary bonding pairs are to be used, either reacting functionality can reside in the dispersible polymer binder, or in the modifying compound. Where covalent complementary bonding pairs are to be used, suitable modifying compounds include, but are not limited to, unsaturated monoepoxides including glycidyl (meth)acrylate, allyl glycidyl ether, glycidyl cinnamates, glycidyl crotonares, glycidyl itaconates, glycidyl norbornenyl ester, glycidyl norbornenyl ether, N-t-butylaminoethyl (meth)acrylate, (meth)acrylic acid, dimethyl aminoethyl methacrylate, and the like.

The radiation curable, dispersible polymer binder compositions of the present invention may or may not be homogeneous in their compositional distribution. For example, in a particular embodiment of the present invention, one or more of the radiation curable, dispersible polymer binder compositions may be multistage core/shell polymers, whereby the the first stage contains units derived from monomers that give a soft, elastomeric composition, and later stages contain units derived from monomers that give a polymeric composition that is harder than the first stage.

In a second embodiment of the present invention, an aqueous, or "latex", binder dispersion is provided which comprises an aqueous dispersion of at least one (i.e., one or more) of the radiation curable, dispersible polymer binder compositions described hereinabove in connection with the first embodiment of the present invention in an aqueous medium. The aforementioned polymerization techniques which may be used to prepare the radiation curable, dispersible polymer binder compositions of the present invention may, with minimal processing after polymerization, result in the formation of this aqueous, or "latex", binder dispersion.

In a third embodiment of the present invention, a radiation curable latex binder blend is provided for formulation into a radiation curable aqueous ink jet ink composition. The curable latex binder blend is an aqueous dispersion comprising at least one radiation curable, dispersible polymer binder composition of the type described hereinabove and a liquid medium. The liquid medium of the aqueous dispersion of the radiation curable latex binder blend is an additional aqueous medium, which may be the same as, or different from, or in addition to, the aqueous medium which is formed by the polymerization technique used to prepare the radiation curable, dispersible polymer binder compositions. The radiation curable, dispersible polymer binder compositions are dispersed in the aqueous medium to form the curable latex binder blend in accordance with the present invention. The curable latex binder blend of the present invention is capable of being formulated into a curable latex ink composition, along with suitable colorants, such that the ink composition remains capable of being jetted through an ink jet printhead.

The curable latex binder blend may further include typical radiation curable monomers, typical curable oligomers, or mixtures thereof, to further enhance the performance properties of the curable latex ink composition which is formulated therewith, as long as the viscosity of the resulting ink composition is not increased to the point where the ink composition is no longer jettable from the ink jet print head. The radiation curable monomers and oligomers are unreactive at ambient conditions and capable of being initiated when exposed to actinic radiation such that they react with each other and also with the curable high molecular weight crosslinked polymer binder (or binders).

Suitable radiation curable monomers for use in the curable latex binder blend include, without limitation, hexanediol diacrylate, trimethylolpropane triacrylate, pentaerythritol triacrylate, 10 polyethyleneglycol diacrylate, for example, tetraethyleneglycol diacrylate, dipropyleneglycol diacrylate, tri(propylene glycol) triacrylate, neopentylglycol diacrylate, bis(pentaerythritol) hexa-acrylate, and the acrylate esters of ethoxylated or propoxylated glycols and polyols, for example, propoxylated neopentyl glycol diacrylate, isodecyl (meth) acrylate, ethoxylated trimethylolpropane triacrylate, triethylene glycol divinyl ether, diethylene glycol divinyl ether, 1,4-cyclohexanedimethanol divinyl ether and ethylene glycol monovinyl ether, as well as ethyl-1 propenyl ether, triethyleneglycol methyl propenyl ether, triethyleneglycol methyl vinyl ether and 2-cyclopenten-1-yl ether, and mixtures thereof.

Suitable radiation curable oligomers for use in the curable latex binder blend of the present invention include, without limitation, CN985, CN975, CN301 and CN501 available from Sartomer Company, Exton, PA, USA.

A fourth embodiment of the present invention provides a radiation curable aqueous ink jet ink composition which comprises a liquid medium, a colorant and the latex binder blend described hereinabove. The liquid medium is typically predominantly water, preferably deionized water. The curable aqueous ink composition of the present invention may include the radiation curable latex binder blend in an amount of from 0.1% to 25 %, such as from 1% to 20%, by weight based on the total weight of the curable aqueous ink composition.

Suitable colorants for use in the aqueous ink jet ink composition may be pigments, dyes or mixtures thereof. Moreover, the pigment may be an organic pigment or an inorganic pigment. Suitable organic pigments that can be used in the formulated ink include, for example, surface modified and unmodified, anthroquinones, phthalocyanine blues, phthalocyanine greens, diazos, monoazos, heterocyclic yellows, pyranthrones, quinacridone pigments, dioxazine pigments, indigo, thioindigo pigments, perynone pigments, perylene pigments, isoindolene, polymer particles having at least one void, and the like. Carbon black is the generic name for small particle size carbon particles formed in the gas phase by the thermal decomposition of hydrocarbons and includes, for example, materials known in the art as furnace black, lampblack, channel black, acetylene black. Carbon black additionally encompasses treated, modified, and oxidized cabon black. Suitable inorganic pigments include titanium dioxide, iron oxide, and other metal powders. Generally, the amount of pigment(s) used is less than 20%, preferably 3-8%, more preferably 2-6% by weight based on the total weight of the latex ink composition. Polymer dispersed pigments used in this invention may be stabilized using random or block copolymer dispersants, or mixtures thereof. Dyes suitable as colorants for use in this invention include water soluble dyes, dispersed dyes and polymer dispersed dyes, such as for example those described in WO0250197A1 and US6455611B1, or mixtures thereof.

In the case where ultraviolet radiation is used to initiate the reaction, the aqueous ink jet ink composition includes a photoinitiator, or combination of photoinitiators that can react with the radiation curable functionalities of the radiation curable, dispersible polymer binder composition to start a crosslinking reaction. Any photoinitiator known in the art can be used to initiate the reaction. It is preferred that the photoiniator(s) is dispersable or soluble in water. The photoinitiator(s) should be chosen such that the absorption of the photoinitiator is optimized for particular colorants being used in the ink, and for the lamp source being used, which would be within the ability of persons having ordinary skill in the art. If desired, a photoinitiator synergist may be used to enhance cure and reduce oxygen inhibition.

The radiation curable aqueous ink composition may also include water miscible or soluble materials such as polymers other than the curable dispersible binder polymers of this invention, humectants, dispersants, penetrants, chelating agents, co-solvents, defoamers, buffers, biocides, fungicides, viscosity modifiers, bactericides, surfactants, anti-curling agents, anti-bleed agents and surface tension modifiers, all as are well known to persons of ordinary skill in the art.

For example, suitable humectants include, without limitation, ethylene glycol, 1,3-propanediol, 1,4-butanediol, 1,4-cyclohexanedimethanol, 1,5-pentanediol, 1,6-hexanediol, 1,8-octanediol, 1,2-propanediol, 1,2-butanediol, 1,3-butanediol, 2,3-butanediol, diethylene glycol, triethylene glycol, tetraethylene glycol, polyethylene glycol with average molecular weight of 200, 300, 400, 600, 900, 1000, 1500 and 2000, dipropylene glycol, polyproylene glycol with average molecular weight of 425, 725, 1000, and 2000, 2-pyrrolidone, 1-methyl-2-pyrrolidone, 1-methyl-2-piperidone, N-ethyl-lacetamide, N-methlpropionamide, N-acetyl ethanolamine, N-methylacetamide, formamide, 3-amino-1, 2-propanediol, 2,2-thiodiethanol, 3,3-thiodipropanol, tetramethylene sulfone, butadiene sulfone, ethylene carbonate, butyrolacetone, tetrahydrofurfuryl alcohol, glycerol, 1,2,4-butenetriol, trimethylpropane, pantothenol, Liponic EG-1. Preferred humectants are polyethylene glycol with average molecular weight of 400 to 1000, 2-pyrrolidone 2,2-thiodiethanol, and 1,5-pentanediol. The amount of humectant used is determined by the properties of the ink and may range from 1-30%, preferably 5-15%, by weight, based on the total weight of the ink.

Preferred penetrants include n-propanol, isopropyl alcohol, 1,3-propanediol, 1,2-hexanediol, and hexyl carbitol. The use of suitable penetrants will depend on the specific application of the ink. Useful examples include, but are not limited to, pyrrolidone, and N-methyl-2-pyrrolidone.

Examples of suitable chelating agents include, but are not limited to:

EDTA and salts thereof, organo-phosphonic acids and salts thereof. When chelating agents are included in the curable aqueous ink formulation they are typically added at concentrations of from 0.05% to 20% by weight based on the total weight of the curable aqueous ink formulation.

Defoaming agents useful in forming aqueous dispersions of pigments are well known in the art and commercially available examples include Surfynol 104H and Surfynol DF-37 (Air Products, Allentown, PA). The amount of defoaming agent in the curable aqueous ink composition will typically range from 0% to 0.5% by weight, based on the total weight of the curable aqueous ink composition.

The radiation curable aqueous ink composition of the present invention may be prepared by any method known in the art for making such compositions, for example, by mixing, stirring or agitating the ingredients together using any art recognized technique to form an aqueous ink. The procedure for preparation of the ink composition of the present invention is not critical except to the extent that the ink composition is homogenous.

A fourth embodiment of the present invention provides a method for improving the durability of a radiation curable ink jet ink composition applied to a substrate comprising: (a) forming a aqueous ink jet ink composition comprising a liquid medium, a colorant, a radiation curable, dispersible polymer binder composition which is unreactive at ambient conditions and are capable of being intiated via actinic radiation; (b) applying the ink jet ink composition onto a substrate; and (c) curing the ink jet ink composition by applying ultraviolet or electronic beam radiation to the ink composition.

As used herein, the term "durability" is intended to include, but not necessarily be limited to, ink composition properties such as substrate holdout, adhesion, abrasion resistance, wash resistance, smear resistance and flexibility.

The aqueous ink jet ink compositions of the present invention are suitable for application by one of the ink jet techniques known in the art using, for example, thermal or bubble jet printers, piezoelectric printers, continuous flow printers, air brush or valve jet printers, to a substrate. Preferred substrates are fabrics, either woven or nonwoven, which may be formed from suitable fibers such as, for example, cotton, polyester, aramid, silk, acrylic, wool, rayon, nylon, polyamide, and glass. Any suitable substrate may be utilized, including paper, vinyl, leather and polyester. After application to a suitable substrate, the ink composition is then cured, preferrably through exposure to actinic radiation such as ultraviolet (UV) or electron-beam (E-beam) radiation. As will be understood by persons of ordinary skill in the art, curing conditions used for the ink compositions of the present invention will vary depending on ink film thickness, colorant, and substrate. Generally, a cure dose of about 300mJ/cm2 to 700mJ/cm2 is sufficient to enact curing. A UV lamp source with a broad range of wavelength, such as that achievable with a iron doped or gallium doped UV lamp, is preferred when curing ink films greater than 6 microns in thickness, or when curing ink compositions containing colorants that absorb radiation in the wavelength region characteristic of a typical H bulb.

EXAMPLES

The abbreviations listed below are used throughout the following examples:

ALMA = allyl methacrylate
AMPS = 2-acrylamido-2-methylpropane sulfonic acid
BA = butyl acrylate
DVB = divinylbenzene
EA = ethyl acrylate
FMA = furfuryl methacrylate
GMA = glycidyl methacrylate
IBOA = isobornyl acrylate
MAA = methacrylic acid
MMA = methyl methacrylate
TBAEMA = N-t-butylaminoethyl (meth)acrylate
TMPTA = trimethylol propane triacrylate

Example 1

(Radiation Curable Latex Binder for Radiation Curable Aqueous Ink Jet Ink Composition)

Latex A is a radiation-curable latex dispersion formed by making a single stage emulsion polymer of composition 60 wt% EA / 22 wt% Styrene / 3 wt% MAA / 10 wt% DVB / 5 wt% ALMA. Thus, a monomer emulsion is made by mixing 60 grams ("g") of EA, 22g of styrene, 3g of MAA 10g of DVB and 5g of ALMA and 1.5g of sodium laurel sulfate in 28% aqueous solution (hereinafter "SLS (28%)") and 100g of water. Into the reactor is charged 82g of water and 4.5g of SLS (28%). This is then heated to 50°C. At 50°C, a solution consisting of 0.003g ferrous sulfate heptahydrate, 0.056g of sodium salt of ethylene diamine tetraacetic acid and 3g de-ionized (hereinafter "DI") water is added to the kettle. After 1 minute, 20g of the monomer emulsion above is charged into the reactor. An initial catalyst solution consisting of 0.054g ammonium persulfate, 0.04g 70% t-butyl hydroperoxide, and 5g DI water is added, followed by the addition of an initial activator solution consisting of 0.05g sodium bisulfite and 0.02g sodium hydrosulfate dissolved in 5g DI water. After waiting 10 minutes, a cofeed solution consisting of 0.143g 70% t-butyl hydroperoxide in 9g DI water along with a separate cofeed solution of 0.125g sodium bisulfite in 9g DI water is initiated. Simultaneously, a gradual addition of the remaining monomer emulsion is initiated. The total feed time for the monomer emulsion and initiator feeds is 90 minutes. When all feeds are complete, the reactor is held at 55°C for an additional 20 minutes. Aqueous solutions of t-butyl hydroperoxide (70%) and sodium formaldehyde sulfoxylate are added sequentially with 20-minute hold periods at 55°C.

Latex A produced by the foregoing procedure will be a radiation curable latex binder blend, in accordance with the present invention, that is suitable for formulating into a radiation curable aqueous ink jet ink composition. Latex A should have approximately 15 wt% solids content, based on the total weight of Latex A. In the event that the solids content of Latex A is greater than the desired 15 wt%, water or another suitable aqueous medium is added and mixed therewith to attain the desired 15 wt%. More particularly, the solids component of Latex A includes a radiation curable, dispersible polymer binder composition that contains functionalities in the form of covalently bound unreacted double bonds which are available for initiation upon exposure to UV radiation. The radiation curable, dispersible polymer binder composition is expected to have a molecular weight of from about 500,000 to about 2,500,000.

Example 2

(Radiation Curable Latex Binder Blend for Radiation Curable Aqueous Ink Jet Ink Composition)

Latex B is a radiation-curable acrylic latex dispersion formed by making a two stage polymer of overall composition 40 wt% BA / 32 wt% MMA / 25 wt% MAA / 3.0 wt% ALMA using the process described in Example 1. 15% of the acid equivalents are neutralized with ammonium hydroxide. To this composition is added an amount of glycidyl methacrylate corresponding to 74 mole percent of the acid, and reacting at 80°C until essentially all the glycidyl methacrylate has reacted.

Latex B produced by the foregoing procedure will be a radiation curable latex binder blend, in accordance with the present invention, that is suitable for formulating into a radiation curable aqueous ink jet ink composition. Latex B should have approximately 15 wt% solids content, based on the total weight of Latex B. In the event that the solids content of Latex B is greater than the desired 15 wt%, water or another suitable aqueous medium is added and mixed therewith to attain the desired 15 wt%. More particularly, the solids component of Latex B includes a radiation curable, dispersible polymer binder composition that contains functionalities in the form of methacrylate functionalities which are available for initiation upon exposure to UV radiation. The radiation curable, dispersible polymer binder composition is expected to have a molecular weight of from about 500,000 to about 2,500,000.

**Example 3 (Comparative)**

**(Unreactive Latex Binder Blend - Not Crosslinked)**

Comparative Latex C is an unreactive latex dispersion formed by preparing a two stage polymer of overall composition 60 wt% BA / 35 wt% MMA / 5 wt% MAA, using the process described in Example 1. The resulting Latex C has no residual methacrylate functionality and is, therefore unreactive when exposed to actinic radiation. It is neutralized with ammonia to pH 7.0. The resulting Latex C is not expected to be effective as a radiation curable polymer binder blend for formulation into radiation curable latex ink jet ink compositions.

Example 4 (Comparative)

**(Unreactive Latex Binder Blend - Crosslinked)**

Comparative Latex D is an unreactive latex dispersion formed by preparing a polymer of composition 40 wt% BA / 35 wt% MMA / 21 wt% EA / 3 wt% ALMA / 1 wt% MAA using the process described in Example 1. The resulting Latex D is not expected to be effective as a radiation curable polymer binder blend for fomulation into curable latex ink compositions

**Example 5**

**(Acrylic-Urethane Radiation Curable Latex Binder Blend for Radiation Curable Aqueous Ink Jet Ink Composition)**

Latex E is prepared by adding 10g of CN-981 (urethane acrylate oligomer available from Sartomer Company, USA) to 100g of Latex B, described hereinabove in Example 2. The mixture is mixed for 1 hour. The resulting Latex E produced by the foregoing procedure will be a radiation curable latex binder blend, in accordance with the present invention, that is suitable for formulating into a radiation curable latex ink jet ink composition. Latex E should have approximately 15 wt% solids content, based on the total weight of Latex E and water or another suitable aqueous medium should be added and mixed therewith in the event that the solids content is initially higher than the desired 15 wt%. The solids component of Latex F includes radiation curable, dispersible polymer binder compositions that contain functionalities in the form of epoxy and acrylate functionalities which are available for initiation upon exposure to UV radiation. The radiation curable, dispersible polymer binder compositions are expected to have a molecular weight of from about 500,000 to about 2,500,000.

**Example 6**

**(Radiation Curable Acrylic Latex Binder Blend for Radiation Curable Aqueous Ink Jet Ink Composition)**

Latex F is a radiation-curable acrylic latex dispersion formed by making a polymer of overall composition 20 wt% FMA / 20 wt% BA / 35 wt% MMA / 13 wt% MAA / 2 wt% ALMA / 10 wt% TMPTA using the process described for Latex A. 15% of the acid equivalents are neutralized with ammonium hydroxide. To this composition is added an amount of glycidyl methacrylate corresponding to 74 mole percent of the acid, and reacting at about 80°C until essentially all the glycidyl methacrylate has reacted.

Latex F produced by the foregoing procedure will be a radiation curable latex binder, in accordance with the present invention, that is suitable for formulating into a radiation curable latex ink jet ink composition. Latex F should have approximately 15 wt% solids content, based on the total weight of Latex F, and water or another suitable aqueous medium should be added and mixed therewith in the event that the solids content is initially higher than the desired 15 wt%. More particularly, the solids component of Latex F includes a radiation curable polymer binder composition that contains functionalities in the form of methacrylate functionalities which are available for initiation upon exposure to UV radiation. The radiation curable, dispersible polymer binder composition is expected to have a molecular weight of from about 500,000 to about 2,500,000.

### Example 7

### (Crosslinked Curable Acrylic Latex Binder for Curable Aqueous Ink Jet Ink Composition)

Latex G is a radiation-curable acrylic latex dispersion formed by making a polymer of overall composition 20 wt% TBAEMA / 20 wt% BA / 35 wt% MMA / 20 wt% HEMA / 5 wt% ALMA using the process described in Example 1. To this composition is added an amount of glycidyl methacrylate corresponding to 74 mole percent of the amine, and reacting at about 80°C until essentially all the glycidyl methacrylate has reacted.

Latex G produced by the foregoing procedure will be a radiation curable latex binder blend, in accordance with the present invention, that is suitable for formulating into a radiation curable latex ink jet ink composition. Water or another suitable aqueous medium should be added and mixed therewith in the event that the solids content is initially higher than the desired 15 wt%. The solids component of Latex G includes a radiation curable, dispersible polymer binder composition that contains finctionalities in the form of methacrylate functionalities which are available for initiation upon exposure to UV radiation. The radiation curable, dispersible polymer binder composition is expected to have a molecular weight of from about 500,000 to about 2,500,000.

### Example 8

### (Rubber Core/Shell Radiation Curable Latex Binder Blend for Radiation Curable Aqueous Ink Jet Ink Composition)

Latex H is a radiation-curable core/shell acrylic latex dispersion formed by the following process.

A core/shell emulsion polymer is prepared, by a well known process, with a first stage composition of 84 wt% BA / 10 wt% DVB / 5 wt% ALMA / 1 wt% MAA and a second stage composition of 60 wt% EA / 24 wt% styrene / 1 wt% MAA / 10 wt% DVB / 5 wt% ALMA. The weight ratio of first stage monomer to second stage monomer in this core/shell polymer is 1 to 1.

Preparation of Stage One Monomer Emulsion

84g of BA, 10g of DVB, 5g of ALMA and 1g of MAA are premixed in a small container. Charge 1.5g of SLS (28%) and 100g of water into a separate monomer emulsion container. The premix monomer is added into the monomer emulsion container under agitation over 30 minutes to form the stage one monomer emulsion.

Preparation of Stage Two Monomer Emulsion

60g of EA, 24g of styrene, 1g of MAA, 10g of DVB and 5g of ALMA are premixed in a small container. Charge 1.5g of SLS (28%) and 100g of water into a separate second monomer emulsion container. The premix monomer is added into the second monomer emulsion tank under agitation over 30 minutes to form the stage two monomer emulsion.

Polymerization of Stage One and Stage Two Monomers

A reactor is charged 200g of water and 9.0g of SLS (28%) under agitiation. The reactor and its contents are heated to 85°C. At 85°C, 30g of the stage one monomer emulsion above is charged into the reactor along with a mixture of 0.4g of ammonium persulfate in 10g of water and the mixture is allowed to stand for 10 minutes. The rest of the stage one monomer emulsion is charged into the reactor over a period of 60 minutes along with a co-feed initiator solution prepared from 0.1g of ammonium persulfates in 10g of water. The co-feed initiator solution is also fed into the reactor over a period of 60 minutes. The stage two monomer emulsion is fed to the reactor as soon the first stage monomer emulsion feed ends. The stage two monomer emulsion is charged into the reactor over a period of 60 minutes, along with a co-feed initiator solution prepared from 0.1g of ammonium persulfate in 10g of water. The co-feed initiator solution is also fed into the reactor over a period of 60 minutes. The reactor is then cooled to 55°C. Aqueous solutions 1g of t-butyl hydroperoxide (70%) in 5g of water and 0.5g of sodium formaldehyde sulfoxylate in 10g of water are added sequentially with 20-minute hold periods at 55°C.

Latex H produced by the foregoing procedure will be a radiation curable latex binder blend, in accordance with the present invention, that is suitable for formulating into a radiation curable latex ink jet ink composition. Latex H should have approximately 15 wt% solids content, based on the total weight of Latex H, and water or another suitable aqueous medium should be added and mixed therewith in the event that the solids content is initially higher than the desired 15 wt%. More particularly, the solids component of Latex H includes a radiation curable, dispersible polymer binder composition that contains radiation curable functionalities which are available for initiation upon exposure to UV radiation. The radiation curable, insoluble polymer binder composition is expected to have a molecular weight of from about 500,000 to about 2,500,000.

Radiation Curable Aqueous Ink Jet Ink Compositions

The radiation curable latex binder blends, which include the radiation curable, dispersible polymer binder compositions of the present invention, can be formulated into radiation curable latex ink jet ink compositions capable of application to susbtrates by ink jet technologies.

More particularly, the radiation curable latex binder blends described in Examples 1 through 8 can be formulated into cyan ink jet inks according to the combination of ingredients as shown in Table 1 below. Examples of eight individual radiation curable latex ink jet ink compositions (i.e., Inks A through H) in accordance with the present invention are provided, i.e., one ink composition for each latex binder blend of Examples 1 through 8 (including comparative Examples 3 and 4). It is noted that the numberic values in Table 1 are weight percents based upon the total weight of each ink composition.

Table 1:

| Sample Radiation Curable Latex Ink Jet Ink Compositions (for UV Curable Inks) | | | | | | | | |
|---|---|---|---|---|---|---|---|---|
| Composition | Ink A | Ink B | Ink C Comparative | Ink D Comparative | Ink E | Ink F | Ink G | Ink H |
| AcryJet™ Cyan 157 | 17.50 | 17.50 | 17.50 | 17.50 | 17.50 | 17.50 | 17.50 | 17.50 |
| Latex A | 25.00 | | | | | | | |
| Latex B | | 25.00 | | | | | | |
| Latex C (comparative) | | | 25.00 | | | | | |
| Latex D (comparative) | | | | 25.00 | | | | |
| Latex E | | | | | 25.00 | | | |
| Latex F | | | | | | 25.00 | | |
| Latex G | | | | | | | 25.00 | |
| Latex H | | | | | | | | 25.00 |
| Ammonium nitrate (25% in Water) | 3.00 | 3.00 | 3.00 | 3.00 | 3.00 | 3.00 | 3.00 | 3.00 |
| N-methylpyrrolidone | 6.50 | 6.50 | 6.50 | 6.50 | 6.50 | 6.50 | 6.50 | 6.50 |
| Liponic EG-7 | 1.00 | 1.00 | 1.00 | 1.00 | 1.00 | 1.00 | 1.00 | 1.00 |
| Dynol 604 | 0.50 | 0.50 | 0.50 | 0.50 | 0.50 | 0.50 | 0.50 | 0.50 |

EP 1 571 184 A1

Table 1: (continued)

| Sample Radiation Curable Latex Ink Jet Ink Compositions (for UV Curable Inks) | | | | | | | | |
|---|---|---|---|---|---|---|---|---|
| Composition | Ink A | Ink B | Ink C Comparative | Ink D Comparative | Ink E | Ink F | Ink G | Ink H |
| 1,3-propanediol | 10.20 | 10.20 | 10.20 | 10.20 | 10.20 | 10.20 | 10.20 | 10.20 |
| DI water | 31.30 | 31.30 | 36.30 | 36.30 | 31.30 | 31.30 | 31.30 | 31.30 |
| Esacure™ DP 250 | 5.0 | 5.0 | - | - | 5.0 | 5.0 | 5.0 | 5.0 |

AcryJet$^{TM}$ is a trademark of the Rohm and Haas Company, Philadelphia, PA, U.S.A. The ammonium nitrate serves as a pH buffer and N-methylpyrrolidone functions as a penetrant in the curable latex ink compositions. Liponic EG-7 is a humectant which is available from Lipo Chemicals, Inc. Dynol 604 is a surfactant available from Air Products company, U.S.A. 1,3-propanediol functions as a humectant and/or penetrant. Esacure DP 250 is a water dispersible photoinitiator available from Lamberti S. p. A., Italy.

Examples of E-beam radiation curable latex ink jet ink compositions which incorporate Latexes A, B, C, F and G are provided in Table 2 below. It is noted that, as is well known in the art, E-beam radiation curable ink jet ink compositions do not require the inclusion of photoinitiators. Thus, for comparison, selected radiation curable latex ink jet ink compositions (i.e., Inks A, B, C, F and G) from Table 1 above have been modified by elimination of the photoinitiator and adjustment of the amounts of the remaining components of the ink composition.

Table 2

| Sample Radiation Curable Latex Ink Jet Ink Compositions (for E-beam Curable Inks) | | | | | |
|---|---|---|---|---|---|
| Composition | Ink A' | Ink B' | Ink C' Comparative | Ink F' | Ink G' |
| AcryJet$^{TM}$ Cyan 157 | 17.50 | 17.50 | 17.50 | 17.50 | 17.50 |
| Latex A | 25.00 | | | | |
| Latex B | | 25.00 | | | |
| Latex C(comparative) | | | 25.00 | | |
| Latex G | | | | 25.00 | |
| Latex H | | | | | 25.00 |
| Ammonium nitrate (25% in Water) | 3.00 | 3.00 | 3.00 | 3.00 | 3.00 |
| N-methylpyrrolidone | 6.50 | 6.50 | 6.50 | 6.50 | 6.50 |
| Liponic EG-7 | 1.00 | 1.00 | 1.00 | 1.00 | 1.00 |
| Dynol 604 | 0.50 | 0.50 | 0.50 | 0.50 | 0.50 |
| 1,3-propanediol | 10.20 | 10.20 | 10.20 | 10.20 | 10.20 |
| DI water | 36.30 | 36.30 | 36.30 | 36.30 | 36.30 |

For all of the curable latex ink compositions provided in Tables 1 and 2, after the final ink jet ink compositions are formulated and well-mixed, they are each filtered using a 1 micron filter. Each ink jet ink composition shown in Tables 1 and 2 would be applied separately to a substrate. Each ink composition would then be cured under either a UV lamp or an electron beam lamp, as appropriate to the nature of the particular ink, to initiate reaction of the photocurable functionalities of the latex binder blends (also known as "curing", which results in further crosslinking).

The UV curable latex ink jet ink compositions labeled Ink A, Ink B and Inks E through H (which contain Latexes A, B and E through H, respectively) are expected to demonstrate improvements in one or more of the following properties over the comparative latex ink compositions labeled Ink C and Ink D (which contain comparative Latexes C and D, respectively), when applied and cured onto a substrate: durability, crock resistance, color retention, smear resistance, water resistance, optical density, image quality and lightfastness.

With reference to the E-beam curable latex ink compositions of Table 2, it is expected that the radiation curable latex ink jet ink compositions labeled Ink A', Ink B', Ink G' and Ink H' are expected to show improved properties, compared to Ink C', in one or more of the following properties when applied and cured onto a substrate: Jettability, durability, crock resistance, color retention, smear resistance, water resistance, optical density, image quality, hold out and lightfastness.

## Claims

1. A radiation curable polymer binder composition for formulation into a radiation curable ink jet ink composition, wherein said polymer composition is dispersible in an aqueous medium, is unreactive at ambient conditions and capable of being initiated upon exposure to actinic radiation and has a number average molecular weight greater than 15,000 daltons.

2. The polymer composition of Claim 1, wherein said polymer binder composition has a number average molecular weight of up to 3,000,000.

3. A radiation curable binder blend comprising the radiation curable polymer binder composition of Claim 1, and a liquid medium , wherein, when said radiation curable binder blend is formulated into an ink jet ink composition, said ink jet ink composition is jettable.

4. A radiation curable ink jet ink composition comprising

   a colorant;
   a liquid medium; and
   an aqueous dispersion comprised of the radiation curable polymer binder composition of claim 1.

5. The radiation curable ink jet ink composition of Claim 4 wherein said radiation curable polymer binder composition comprises 1% to 30%, by weight based on the total weight of the dry polymer composition, of units derived from mono-ethylenically unsaturated (meth)acrylates, multi-ethylenically unsaturated (meth)acrylates, and mixtures thereof.

6. The radiation curable ink jet ink composition of Claim 4, wherein said liquid medium comprises at least one component selected from the group consisting of radiation curable monomers, radiation curable prepolymers, radiation curable oligomers, and mixtures thereof, and wherein said liquid medium is present in an amount of from 20 wt% to 85 wt%, based on the total weight of said ink jet ink composition.

7. The radiation curable ink jet ink composition of Claim 4, wherein said polymer binder composition is present in an amount of from 0.1 wt% to 25 wt%, based on the total weight of the ink jet ink composition.

8. The radiation curable ink jet ink composition of Claim 4, wherein said colorant is present in an amount of less than 20 wt%, based on the total weight of the ink jet ink composition.

9. A method for improving the characteristics of a radiation curable ink jet ink composition applied to a substrate comprising the steps of: (a) providing a radiation curable ink jet ink composition comprising a liquid medium, a colorant and an aqueous dispersion of at least one radiation curable polymer binder composition which has a number average molecular weight greater than 15,000 daltons and is dispersible in aqueous media and capable of being initiated upon exposure to actinic radiation; (b) applying said ink jet ink composition to a substrate; and (c) curing said ink jet ink composition by applying actinic radiation thereby forming an image on said substrate.

10. The method of Claim 9, wherein said liquid medium comprises at least one component selected from the group consisting of radiation curable monomers, radiation curable prepolymers, radiation curable oligomers, and mixtures thereof, and wherein said liquid medium is present in an amount of from 20 wt% to 85 wt%, based on the total weight of said ink jet ink composition.

11. The method of Claim 9, wherein said at least one radiation curable polymer binder composition is present in an amount of from 0.1 wt% to 25 wt%, based on the total weight of the ink jet ink composition and comprises units derived from compounds selected from the group consisting of units derived from mono-ethylenically unsaturated (meth)acrylates, multi-ethylenically unsaturated (meth)acrylates, and mixtures thereof.

12. An image formed by the method of claim 9.

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 371 697 A (ROHM AND HAAS COMPANY) 17 December 2003 (2003-12-17) * page 2, line 31 - page 4, line 50 * * page 8, lines 16-30; claims; examples 17-20 * | 1-5,7-9, 11,12 | C09D11/00 |
| A,D | US 6 294 592 B1 (HERRMANN MANFRED ET AL) 25 September 2001 (2001-09-25) * column 1, lines 5-20 * * column 6, line 65 - column 8, line 67 * | 1-12 | |
| A,D | WO 02/064689 A (SOLUTIA INC; GUMMESON, JOEL, J; UCB S.A) 22 August 2002 (2002-08-22) * page 4, line 26 - page 5, line 14 * * page 5, line 30 - page 6, line 6 * * page 10, line 29 - page 11, line 26 * * page 23, line 28 - page 24, line 30; claims; examples * | 1-12 | |
| A | US 2003/171516 A1 (JOHNSON ERIC ALVIN ET AL) 11 September 2003 (2003-09-11) * page 1, paragraph 7 - page 2, paragraph 21 * * page 3, paragraphs 24,26 * | 1-12 | TECHNICAL FIELDS SEARCHED (Int.Cl.7) C09D |

The present search report has been drawn up for all claims

| Place of search | Date of completion of the search | Examiner |
|---|---|---|
| Munich | 4 July 2005 | Komenda, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................
& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 05 25 0952

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2005

| Patent document cited in search report | | Publication date | Patent family member(s) | | Publication date |
|---|---|---|---|---|---|
| EP 1371697 | A | 17-12-2003 | AU | 2003204606 A1 | 15-01-2004 |
| | | | AU | 2003204607 A1 | 15-01-2004 |
| | | | BR | 0302071 A | 17-08-2004 |
| | | | BR | 0302099 A | 08-09-2004 |
| | | | BR | 0302100 A | 08-09-2004 |
| | | | BR | 0302101 A | 08-09-2004 |
| | | | BR | 0302138 A | 24-08-2004 |
| | | | CN | 1495234 A | 12-05-2004 |
| | | | CN | 1482160 A | 17-03-2004 |
| | | | CN | 1493636 A | 05-05-2004 |
| | | | CN | 1495242 A | 12-05-2004 |
| | | | CN | 1490365 A | 21-04-2004 |
| | | | CN | 1497020 A | 19-05-2004 |
| | | | EP | 1371667 A1 | 17-12-2003 |
| | | | EP | 1371685 A2 | 17-12-2003 |
| | | | EP | 1371697 A2 | 17-12-2003 |
| | | | EP | 1371684 A1 | 17-12-2003 |
| | | | EP | 1371679 A1 | 17-12-2003 |
| | | | EP | 1371700 A2 | 17-12-2003 |
| | | | EP | 1371688 A2 | 17-12-2003 |
| | | | EP | 1371705 A1 | 17-12-2003 |
| | | | EP | 1371693 A2 | 17-12-2003 |
| | | | EP | 1371718 A1 | 17-12-2003 |
| | | | EP | 1371698 A1 | 17-12-2003 |
| | | | EP | 1371699 A2 | 17-12-2003 |
| | | | EP | 1371694 A2 | 17-12-2003 |
| | | | EP | 1371704 A2 | 17-12-2003 |
| | | | EP | 1371690 A2 | 17-12-2003 |
| | | | JP | 2004250657 A | 09-09-2004 |
| | | | JP | 2004162003 A | 10-06-2004 |
| | | | JP | 2004162004 A | 10-06-2004 |
| | | | JP | 2004162005 A | 10-06-2004 |
| | | | JP | 2004162006 A | 10-06-2004 |
| | | | JP | 2004162007 A | 10-06-2004 |
| | | | JP | 2004250659 A | 09-09-2004 |
| | | | JP | 2004131689 A | 30-04-2004 |
| | | | JP | 2004043802 A | 12-02-2004 |
| | | | JP | 2004162008 A | 10-06-2004 |
| | | | JP | 2004131690 A | 30-04-2004 |
| | | | JP | 2004250660 A | 09-09-2004 |
| | | | JP | 2004044073 A | 12-02-2004 |
| | | | JP | 2004043803 A | 12-02-2004 |
| | | | JP | 2004027226 A | 29-01-2004 |
| | | | US | 2003232918 A1 | 18-12-2003 |
| | | | US | 2003232916 A1 | 18-12-2003 |
| | | | US | 2003235685 A1 | 25-12-2003 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 05 25 0952

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2005

| Patent document cited in search report | | Publication date | Patent family member(s) | | Publication date |
|---|---|---|---|---|---|
| EP 1371697 | A | | US 2003232914 A1 | | 18-12-2003 |
| | | | US 2003232187 A1 | | 18-12-2003 |
| | | | ZA 200304540 A | | 17-02-2004 |
| | | | ZA 200304541 A | | 17-02-2004 |
| US 6294592 | B1 | 25-09-2001 | DE 19727767 A1 | | 07-01-1999 |
| | | | DE 59807880 D1 | | 15-05-2003 |
| | | | WO 9901517 A1 | | 14-01-1999 |
| | | | EP 0993495 A1 | | 19-04-2000 |
| | | | JP 2002508014 T | | 12-03-2002 |
| WO 02064689 | A | 22-08-2002 | CA 2437853 A1 | | 22-08-2002 |
| | | | CN 1503829 A | | 09-06-2004 |
| | | | EP 1379596 A2 | | 14-01-2004 |
| | | | JP 2004526016 T | | 26-08-2004 |
| | | | WO 02064689 A2 | | 22-08-2002 |
| | | | US 2002198289 A1 | | 26-12-2002 |
| US 2003171516 | A1 | 11-09-2003 | US 6541590 B1 | | 01-04-2003 |
| | | | US 2003171517 A1 | | 11-09-2003 |
| | | | EP 1108758 A2 | | 20-06-2001 |
| | | | EP 1108759 A2 | | 20-06-2001 |
| | | | JP 2001240621 A | | 04-09-2001 |
| | | | JP 2001240622 A | | 04-09-2001 |

EPO FORM P0459